# EUROPEAN PATENT APPLICATION

(11) **EP 3 786 547 A1**
(43) Date of publication of application: **03.03.2021**
(21) Application number: 19209183.3
(22) Date of filing: 14.11.2019
(51) Int. Cl.: F25B 25/00, F28D 20/00

(54) **COLD STORAGE SYSTEM AND ASSOCIATED METHOD**

(30) Priority: 30.08.2019 EP 19194742
(71) Applicant: SAB Engineers GmbH, 64293 Darmstadt (DE)
(72) Inventor: ALBAKRI, Sami Abdulrahman, 64293 Darmstadt (DE)
(74) Representative: LifeTech IP Spies & Behrndt Patentanwälte PartG mbB

(57) **Abstract**

A Cold Storage System comprises: a cold storage (1) for storing coldness; a compressor (2) enabling the circulation of a heat transfer fluid; a heat exchanger (3) for delivering of coldness to a consumer, wherein the heat exchanger (3) is arranged between the cold storage (1) and the compressor (2); a heat exchanger bypass (4) which bypasses the heat exchanger (3), a heat exchanger bypass valve (41) for the heat exchanger bypass (4) which is adapted to control a flow of heat transfer fluid through the heat exchanger bypass (4) in order to keep a temperature at the inlet of the compressor (2) within a predefined temperature range or at a predefined setpoint temperature.

## Description

The present invention relates to a cold storage system and a method for discharging a cold storage system and, in particular, to a system for cold storage with a heat exchanger bypass used during a discharging phase for maintaining a constant temperature at the inlet of the HTF compressor.

### BACKGROUND

Cold Storage Systems find applications in industry as well as in commercial and private contexts. An example of such an application is temperature equalization over day and night cycles in buildings or in industrial plants like e.g. solar panel systems, in particular in countries where differences between daytime and nighttime temperatures are considerable. Moreover, as scientific research confirms that human activities contribute significantly to global climate change, technical facilities in general are facing a challenge to reduce the emission of heat energy and greenhouse gases, and to operate in more energy efficient ways, which pertains in particular to devices providing refrigeration. Cold Storage Systems - rather than devices delivering refrigeration without comprising an integrated cold storage - can be an efficient, economic way to contribute to these objectives.

The term Cold Storage System refers to a system of heat energy transfer comprising a device designed to retain refrigerated material (the cold storage), which may further encompass means for achieving the refrigeration of this material (a chiller) and for absorbing heat energy (by a heat exchanger) from a particular part of the environment (the consumer) for the duration of predefined periods of time.

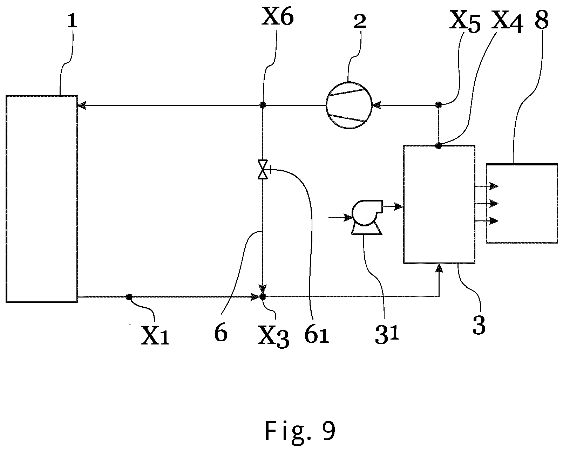

**Fig. 9** depicts a conventional Cold Storage System, comprising a circuit of pipes holding an appropriate medium for the conduction of the heat energy (HTF, heat transfer fluid), moved by a pumping device (here a compressor 2) and passing in series through a chiller 5, a cold storage 1 - which due to the intended functionality of the system will be referred to as "charged" if it is capable of absorbing heat energy from the HTF - and a heat exchanger 3 to provide refrigeration to a consumer 8. In the following, a situation in which the Cold Storage System is operated to provide coldness to the consumer 8 via the heat exchanger 3 will be referred to as discharging mode, while a situation in which the Cold Storage System is operated to reduce the heat energy in the cold storage 1 by means of the chiller 5 will be referred to as charging mode. The system in Fig. 9 is displayed in discharging mode, where the chiller 5 is not in operation, while the heat exchanger 3 - which here could be a simple coil which cools the ambient air passed over it by a fan 31 - provides coldness to the consumer. The depicted system also comprises a cold storage bypass 6 adapted to channel HTF from a position X6 after the compressor 2 to a position X3 before the inlet of the heat exchanger 3, and a cold storage bypass valve 61 adapted to control the flow of HTF through the cold storage bypass 6 such that the temperature of the HTF at the inlet of the heat exchanger 3 can be regulated.

In many examples of a Cold Storage System, motion of the HTF is achieved via an increase in HTF pressure. In the following it will be understood that the HTF is circulated in this way by means of a compressor. For many HTFs used in cold storage systems, compression of the HTF also leads to an increase both in HTF density and in HTF temperature, while a decrease of pressure entails decreased density and temperature. The compressor generally operates with sufficient efficiency only within specific margins of HTF temperature. The reason for this is that increased HTF temperature is generally related to an increased volumetric flow rate (in reference to the same mass flow rate), resulting in a higher power consumption of the compressor. The control of HTF temperature at the inlet of the compressor is therefore important for the overall efficiency of the cold storage system. However, the HTF at the outlet of the heat exchanger will be at high temperature or may fluctuate over a larger range of temperatures, and there is a demand to control the temperature of the HTF as it flows on into the compressor. This reduction of temperature is in particular to be achieved without compromising other components of the Cold Storage System, including the functionality of bypasses as exemplified by the cold storage bypass in Fig 9.

### SUMMARY OF THE INVENTION

At least to some extent, the problems mentioned in the preceding section are solved by a system according to claim 1 and a corresponding method according to claim 10.

The present invention relates to a Cold Storage System comprising a cold storage for storing coldness (i.e. to emit and/or absorb heat energy), a compressor (or some other sort of pumping device) enabling the circulation of a heat transfer fluid (HTF, as e.g. air, carbon dioxide, nitrogen, or some other kind of coolant) in a circuit (of e.g. pipes), and a heat exchanger for delivering of coldness to a consumer. The heat exchanger is arranged on the HTF circuit between the cold storage and the compressor. Furthermore, the system comprises a heat exchanger bypass for HTF, adapted to bypass the heat exchanger and to channel HTF from the outlet of the cold storage to the inlet of the compressor.

When the heat exchanger is in operation and delivers coldness to a consumer, the system is in a discharging mode. In this discharging mode, the HTF leaves the cold storage at a low (e.g., below -10 °C or -20 °C, or at -25 °C) or ultra-low (e.g., below -40 °C, or at -50°C) temperature. The heat exchanger can be, for example, a coil through which the cold HTF passes and which achieves refrigeration through an exemplary fan passing ambient air over the coil. Within the heat exchanger, the HTF effectively absorbs heat energy from the environment, such that the HTF temperature at the outlet of the heat exchanger can be very high (e.g. +50 °C), as it is related e.g. to an ambient temperature. At this temperature, an HTF at a fixed mass flow rate can have a very large volumetric flow rate compared to HTF at cold temperature, which results in a high power consumption of the compressor. The heat exchanger bypass mixes the hot HTF with cold HTF from the exit of the cold storage. Accordingly, the temperature of HTF decreases and thus the volumetric flow rate will decrease, resulting in a low power consumption of the compressor.

According to embodiments of the present invention, the heat exchanger bypass valve is only used in discharging mode in order to maintain a constant temperature (relatively low, for example 25 °C) at the inlet of the compressor. This low and constant temperature can be achieved by bypassing part of the cold HTF at the outlet of the cold storage (which can be, for example, a multi-packed bed system) to the inlet of the compressor using the heat exchanger bypass valve.

Optionally, the heat exchanger bypass further comprises a heat exchanger bypass valve, adapted to control a flow of HTF through the heat exchanger bypass to keep a temperature at the inlet of the compressor within a predefined temperature range or around a setpoint temperature.

Optionally, and depending on requirements for the Cold Storage System, the predefined temperature range is 23 °C to 27 °C, or the predefined setpoint temperature is below 30 °C or at about 25°C.

The efficiency of the cold storage to absorb heat energy from the HTF in discharging mode can vary over time, which can lead to a varying HTF temperature at the exit of the cold storage, and therefore also at the inlet of the heat exchanger. This, in turn, can mean that the heat exchanger does not absorb heat energy from the environment in a constant way.

Optionally, the Cold Storage System further comprises a cold storage bypass with a cold storage bypass valve, wherein the cold storage bypass is adapted to bypass the cold storage and to channel HTF from the inlet of the cold storage to the inlet of the heat exchanger, and the cold storage bypass valve is adapted to control a flow of HTF through the cold storage bypass to keep a temperature at the inlet of the heat exchanger at a predefined range of temperature, or around a setpoint temperature.

Depending on the application, this setpoint temperature can be selectable by the consumer, and should lie above the low or ultra-low temperature at which the HTF exits the cold storage, but below the ambient air temperature (examples for the setpoint temperature could be 8 °C, 14 °C, or 16 °C). According to embodiments, the operation of the cold storage bypass does not interfere with the operation of the heat exchanger bypass.

Optionally, the Cold Storage System further comprises a chiller for cooling the HTF to low or ultra-low temperature. The Cold Storage System can operate in a charging mode during which a temperature within the cold storage is reduced by means of the HTF, and/or in a discharging mode during which the heat exchanger delivers coldness to the consumer.

Besides charging the cold storage, the chiller refrigerates the HTF over time, which can have the effect that the compressor and the chiller are required to work under varying HTF temperature conditions over the course of the charging process. In particular, this can again have a negative effect on the efficiency of the compressor.

Optionally, the Cold Storage System therefore further comprises a chiller/cold storage bypass with a chiller/cold storage bypass valve. The chiller/cold storage bypass is adapted to bypass the cold storage and to channel HTF from the outlet of the chiller to the inlet of the compressor when the Cold Storage System is operated in charging mode. The chiller/cold storage bypass valve is adapted to control a flow of HTF through the chiller/cold storage bypass to keep a temperature at the inlet of the compressor at a predefined range of temperature or around a setpoint temperature.

The retention of heat energy (or coldness) can be achieved within a storage system including one or more so-called packed beds, which are vertical vessels including a bulk of e.g. solid particles through which a stream of gas or liquid passes in order to either deposit or extract heat energy from the solid particles, depending on the mode of operation. Originally designed to facilitate specific chemical processing applications (such as, e.g., adsorption, distillation, separation processes or catalytic reactions), packed beds may be combined into multi-packed bed systems including a plurality of such packed beds, and provide efficient, durable, simple to construct, and scalable thermal energy storage devices.

Optionally, the cold storage of the Cold Storage System includes a multi-packed bed system, comprising a plurality of packed beds and a plurality of packed bed valves such that the amount of HTF flowing through each storage element is controlled by at least one respective packed bed valve.

The HTF temperature after the compressor is of relevance for the discharging rate as well as the temperature profiles in the multi-packed bed system at the end of the discharging phase. Without the heat exchanger bypass, the high HTF temperature at the inlet of the compressor (e.g. 50 °C) will lead to higher temperature at the compressor outlet (e.g. 60 °C). After the compressor, the HTF will enter the multi-packed bed system, leading to faster discharging rate and to higher temperature profiles in the multi-packed bed system. If the heat exchanger bypass is included, a lower HTF temperature at the inlet of the HTF compressor can be achieved (e.g. 25 °C). After the compression, the HTF temperature will increase (to e.g. 35 °C), but remain lower than in a situation without the heat exchanger bypass, before the HTF enters the multi-packed bed system. The relatively lower temperature (35 °C) of the HTF has positive impact on reducing the discharging rate and the temperature profiles in the multi-packed bed system at the end of the discharging phase. Therefore, assuming constant storage capacity, better storage unitization can be achieved if the heat exchanger bypass is included. This in return decreases the investment and operation costs.

Optionally, the Cold Storage System further comprises a control unit configured to control one or more of the following:
- periods of time where the Cold Storage System is in charging and in discharging mode, respectively,
- the heat exchanger bypass valve in order to keep, in discharging mode, the temperature of the HTF at the inlet of the compressor in a predefined temperature range or around a setpoint temperature (e.g. 25 °C),

- the cold storage bypass valve, in order to keep, in discharging mode, the temperature of the HTF at the inlet of the heat exchanger in a predefined temperature range or around a setpoint temperature (which can be selected by the consumer),
- the chiller/cold storage bypass valve, in order to keep, in charging mode, the temperature of the HTF at the inlet of the compressor in a predefined temperature range or around a setpoint temperature (e.g. 10 °C),
- the plurality of packed bed valves, such that, in discharging mode, the heat exchanger bypass discharges selectively one or more packed beds of the multi-packed bed system.

Optionally, the control unit controls the periods of time where the Cold Storage System is in charging and/or in discharging mode following readings of an external temperature and/or following the day and night cycle.

This regulation of the control unit can facilitate an automated equalization of temperatures according to the context where an embodiment of the Cold Storage System is employed. In particular, it can shift heat energy from hot days to comparatively cold nights in countries where differences between daytime and nighttime temperatures are considerable, and/or take advantage of such differences for an increased energy efficiency.

The present invention also pertains to a method for discharging a Cold Storage System with a HTF circuit passing through a cold storage, a heat exchanger, and a compressor. The method includes the steps:
- enabling the circulation of the HTF carrying heat or coldness by a compressor or pump;
- delivering of coldness, by the heat exchanger, to a consumer;
- bypassing the heat exchanger by an amount of HTF along a heat exchanger bypass from the outlet of the cold storage to the inlet of the compressor.

Optionally, the method for discharging the Cold Storage System further comprises controlling an amount of HTF passing through the heat exchanger bypass by a heat exchanger bypass valve, in order to keep the temperature of the HTF at the inlet of the compressor in a predefined range of temperatures around at a setpoint temperature (as, e.g., 25 °C).

Optionally, the cold storage includes a multi-packed bed system comprising a plurality of packed beds and a plurality of packed bed valves, and the method includes controlling, by the plurality of packed bed valves the flow of HTF from the multi-packed bed system such that the heat exchanger bypass discharges selectively one or more packed beds of the multi-packed bed system.

Optionally, the Cold Storage System comprises a control unit configured to control the periods of time where the Cold Storage System is in discharging mode following an external temperature reading and/or following the day and night cycle, and the method further comprises the step of controlling, by the control unit, the Cold Storage System such that it is in discharging mode only during times of specific external temperature ranges and/or during daytime.

### SHORT DESCRIPTION OF FIGURES

Various embodiments of the present invention will be described in the following by way of examples only, and with respect to the accompanying drawings, in which:
- Fig. 1A: shows an embodiment of a Cold Storage System in discharging mode, with the heat exchanger bypass;
- Fig. 1B: displays HTF temperature against time at position X5 in the HTF circuit for a system as shown in Fig. 1A, for a case where the system comprises the heat exchanger bypass as well as for a case where the system does not comprise the heat exchanger bypass;
- Fig. 2A: shows an embodiment of a Cold Storage System in discharging mode with a heat exchanger bypass and a cold storage bypass to regulate the HTF temperature at the inlet of the compressor;
- Fig. 2B: displays HTF temperature against time at a position X3 in the HTF circuit for a system as shown in Fig. 2A, for a case where the system comprises the cold storage bypass, as well as for a case where the system does not comprise the cold storage bypass;
- Fig. 3: shows from top to bottom three consecutive steps for discharging an embodiment of a Cold Storage System comprising a heat exchanger bypass and a cold storage bypass, for the case where the cold storage is a multi-packed bed system;
- Fig. 4: shows an embodiment of a Cold Storage System with an additional chiller;
- Fig. 5A: shows an embodiment of a Cold Storage System with a chiller in charging mode;
- Fig. 5B: displays HTF temperature against time across the compressor for the embodiment of Fig. 5A;
- Fig. 6A: shows an embodiment of a Cold Storage System with a chiller and a chiller/cold storage bypass with a chiller/cold storage bypass valve, in charging mode;
- Fig. 6B: displays HTF temperature against time across the compressor for the embodiment of Fig. 6A when regulated by the chiller/cold storage bypass;
- Fig. 7: shows from top to bottom three consecutive steps (a), (b), (c) for charging an embodiment of a Cold Storage System comprising the heat exchanger bypass and a chiller/cold storage bypass, for a case where the cold storage is a multi-packed bed system and the plurality of packed beds is charged selectively;
- Fig. 8: shows settings for charging an embodiment of a Cold Storage System comprising the heat exchanger bypass and a chiller/cold storage bypass, for a case where the cold storage is a multi-packed bed system and the plurality of packed beds is charged in parallel; and
- Fig. 9: shows a conventional Cold Storage System in discharging mode, comprising a cold storage bypass for the regulation of the HTF temperature at the inlet of the heat exchanger.

### DETAILED DESCRIPTION OF FIGURES

Various examples will now be described more fully with reference to the accompanying drawings, in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

The terminology used herein is for the purpose of describing illustrative examples only and is not intended to be limiting. As used throughout this document, the singular forms "a," "an" and "the" are intended to include the plural forms as well, unless the context clearly indicates otherwise. It will be further understood that the terms "comprises," "comprising," "includes" and/or "including," when used herein as well as everywhere else in this document, specify the presence of stated features, steps, operations, elements and/or components, but do not preclude the presence or addition of one or more other features, steps, operations, elements, components and/or groups thereof.

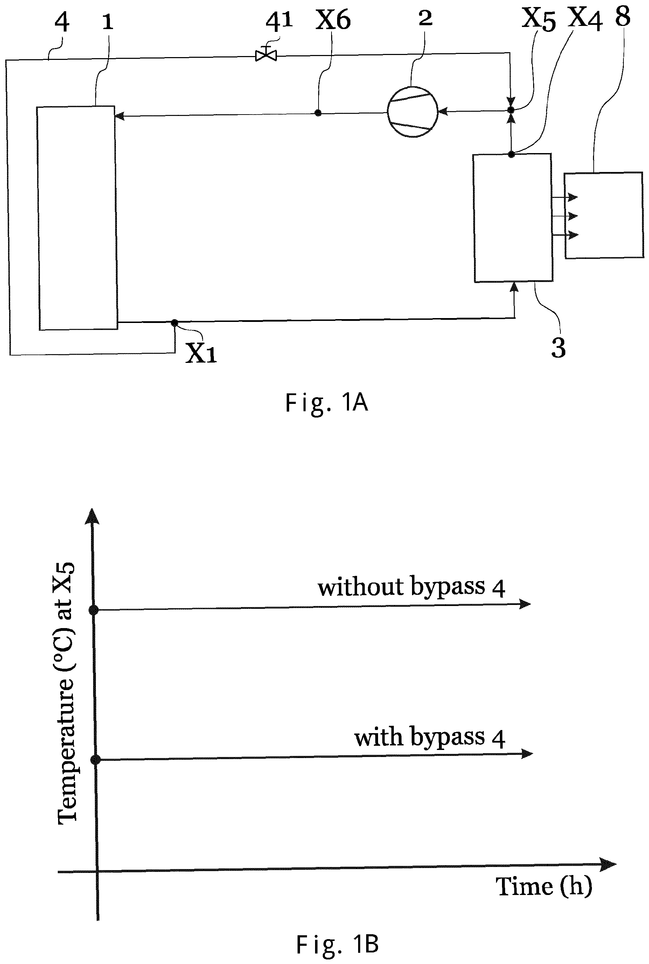

**Fig. 1A** shows an embodiment of a Cold Storage System comprising a cold storage 1, a heat exchanger 3, and a compressor 2, placed in this order along a circuit of heat transfer fluid (HTF), together with a heat exchanger bypass 4. The heat exchanger bypass 4 starts from a position X1 after the outlet of the cold storage 1 on the HTF circuit, and ends at a position X5 before the inlet of the compressor 2 on the HTF circuit. The Cold Storage System is displayed in discharging mode, where the heat exchanger 3 is in operation and delivers coldness to (i.e., absorbs heat energy from) a consumer 8.

The HTF exits the cold storage 1 at low (e.g., below -10 °C) or ultra-low (e.g. -50 °C) temperature. At position X1, a part of the cold HTF is channeled into the heat exchanger bypass 4. The mass flow of HTF that passes through the heat exchanger bypass 4 is controlled by the heat exchanger bypass valve 41. The HTF which does not enter the heat exchanger bypass 4 continues along the HTF circuit, and enters the heat exchanger 3. In the heat exchanger 3, the HTF absorbs heat from the consumer 8, such that the temperature of the HTF at the outlet X4 of the heat exchanger 3 is high (e.g. +50 °C). At the position X5 before the compressor 2, the hot HTF which has passed through the heat exchanger 3 is mixed with the cold HTF that has passed through the heat exchanger bypass 4, such that the temperature of the HTF at the inlet of the compressor 2 is reduced relative to the temperature of the HTF at the outlet of the heat exchanger 3 (position X4). The HTF then passes through the compressor, which also has the effect of slightly increasing the temperature of the HTF (to e.g. +35 °C at position X6 after the compressor 2). Finally, the HTF enters the cold storage 1, where it deposits the heat energy and is cooled down. This completes the HTF circuit.

Without the heat exchanger bypass 4, the HTF would enter the compressor 2 at the same temperature as that at the outlet of the heat exchanger 3 (e.g., +50 °C). Compression of the HTF at the correspondingly high volumetric flow rate leads to a high power consumption for the compressor 2. On the other hand, if the heat exchanger bypass 4 is present, the reduction of the HTF temperature at the inlet of the compressor 2 also reduces the HTF volumetric flow rate, such that the operation of the compressor 2 requires less power.

The reduction of the HTF temperature at the inlet of the compressor 2, achieved by the heat exchanger bypass 4, will also lead to a reduction in HTF temperature at position X6 after the outlet of the compressor, relative to the situation without the heat exchanger bypass 4. This in turn reduces the HTF temperature at the inlet of the cold storage 1. Therefore, the difference between the HTF inflow and outflow temperatures across the cold storage 1 is reduced, which depending on the type of cold storage employed can allow a more efficient operation of the cold storage 1 (this could be the case e.g. if the cold storage 1 comprises a multi-packed bed system).

**Fig. 1B** shows, for a system as displayed in Fig. 1A, the temperature against time of the HTF at position X5 before the inlet of the compressor 2, for a case where the system does not comprise versus a case where the system does comprise the heat exchanger bypass 4. In both cases, the temperature at position X5 in the displayed example is constant in time. However, without the heat exchanger bypass 4 the temperature of the HTF at the position X5 before the inlet of the compressor 2 is high (e.g. 50 °C), whereas with the heat exchanger bypass 4, the temperature of the HTF at the position X5 before the inlet of the compressor 2 is reduced to a lower temperature (e.g. 25 °C) due to the cold HTF passing through the heat exchanger bypass 4.

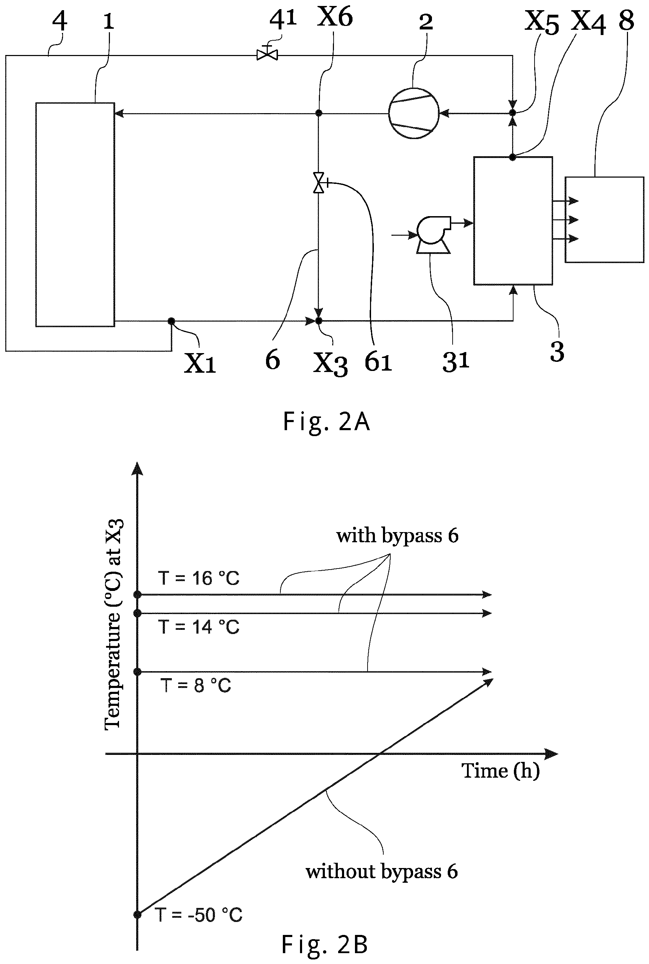

**Fig. 2A** shows an embodiment of a Cold Storage System comprising a cold storage 1, a heat exchanger 3, and a compressor 2, placed in this order along a circuit of heat transfer fluid (HTF), the system further comprising the heat exchanger bypass 4 as in Fig. 1A, and a cold storage bypass 6. The cold storage bypass 6 starts on the HTF circuit at position X6 after the compressor 2, bypasses the cold storage 1, and ends on the HTF circuit at position X3 before the heat exchanger 3. The Cold Storage System is displayed in discharging mode, where the heat exchanger 3 is in operation and delivers coldness to (i.e., absorbs heat energy from) a consumer 8.

During the discharging process, the temperature of the HTF at the outlet of the cold storage 1 is initially at a low or ultra-low temperature (e.g. -50 °C). Depending on the type of cold storage employed, this temperature rises over time, e.g. due to the deposit of heat energy through the HTF in the cold storage 1. The heat exchanger 3 can be realised e.g. as a coil, through which cooling is delivered to the consumer 8 by a flow of ambient air passing over the coil by means of a fan 31. In this setup, the amount of cooling delivered to the consumer 8 depends on the HTF temperature at the inlet of the heat exchanger 3. In order to cancel the time variation in HTF temperature arriving from the cold storage 1, the cold storage bypass 6 delivers HTF of higher temperature from the position X6 after the compressor 2 to the inlet of the heat exchanger 3. Controlling the flow rate of HTF through the cold storage bypass 6 by means of the cold storage bypass valve 61, a constant setpoint temperature at the inlet of the heat exchanger 3 can be achieved. Therefore, by means of the cold storage bypass 6, the heat exchanger 3 can deliver coldness to the consumer 8 in a way which is controlled and constant over time. In the idealized case of no unintended leaking of heat energy out of the system, this also means that the amount of heat energy entering the Cold Storage System through the heat exchanger 3, and thus effectively the discharging process of the cold storage 1, can be controlled by means of the cold storage bypass 6.

Operating the heat exchanger bypass 4 does not compromise the intended effect of the cold storage bypass 6: While the heat exchanger bypass 4 can be used to reduce the HTF temperature at X5 before the HTF enters the compressor 2, the cold storage bypass 6 can still be used to achieve a HTF setpoint temperature at the inlet of the heat exchanger 3.

**Fig. 2B** shows, for a system as displayed in Fig. 2A, the effect of the cold storage bypass 6 on the temperature of the HTF at position X3 on the HTF circuit, before the HTF enters the heat exchanger 3. Without the cold storage bypass 6, the HTF temperature at position X3, and thus at the inlet of the heat exchanger 3, rises over time. With the cold storage bypass 6 in place, the temperature can be stabilized at a fixed setpoint. Since the intention is that this setpoint can be selected by the consumer 8, three different cases of such setpoints (8 °C, 14 °C, 16 °C) are displayed.

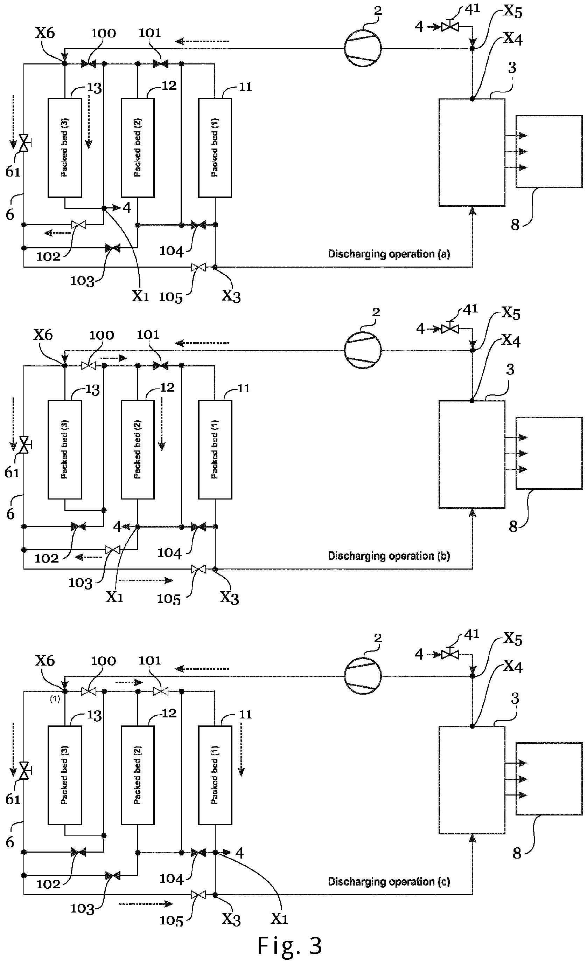

**Fig. 3** shows, from top to bottom, three consecutive steps (a), (b), (c) for discharging an embodiment of a Cold Storage System comprising a cold storage 1, a heat exchanger 3, and a compressor 2, placed in this order along a circuit of heat transfer fluid (HTF), further comprising a heat exchanger bypass 4 and a cold storage bypass 6, for the exemplary case where the cold storage 1 is a multi-packed bed system of three packed beds 11, 12, 13 connected together in parallel. Throughout the process, the cold storage bypass valve 61 is operated to control the temperature at the inlet of the heat exchanger 3 to be at a setpoint temperature. Furthermore, throughout the process the heat exchanger bypass 4 is used to control, via the heat exchanger bypass valve 41, the temperature of the HTF at point X5 before the compressor 2. The heat exchanger bypass 4 is not explicitly drawn in the figure. The three consecutive steps comprise, in turn,
(a) Discharging the third packed bed 13, which is achieved by closing the packed bed valve 104 at the exit of first packed bed 11, the packed bed valve 103 at the exit of second packed bed 12, as well as the packed bed valve 101 between the inlets of the first and second packed bed and the packed bed valve 100 between the inlets of the second and third packed bed. The packed bed valve 102 at the exit of the third packed bed 13 and the packed bed valve 105 between the exits of the packed beds 12 and 13 and the heat exchanger 3 are opened. Therefore, the HTF flows from the compressor 2 to the heat exchanger 3 via the third packed bed 13 and the cold storage bypass 6. The entry X1 of the heat exchanger bypass 4 is located after the third packed bed 13.
(b) When the HTF temperature at the outlet of the third packed bed 13 reaches the setpoint temperature defined for the HTF at the inlet of the heat exchanger 3, the discharging process of the third packed bed 13 is terminated, and the discharging of the second packed bed 12 commences. In order to discharge the second packed bed 12, the packed bed valves at the exit of first packed bed 104, at the exit of third packed bed 102, and between the inlets of the first and second packed bed 101 are closed. The packed bed valves at the exit of the second packed bed 103, between the inlets of the second and third packed bed 100, and the packed bed valve 105 between the exits of the packed beds 12 and 13 and the heat exchanger 3 are opened. Therefore, the HTF flows from the compressor 2 to the heat exchanger 3 via the second packed bed 12 and the cold storage bypass 6. The entry X1 of the heat exchanger bypass 4 is located after the second packed bed 12.
(c) When the HTF temperature at the outlet of the second packed bed 12 reaches the setpoint temperature for the HTF at the inlet of the heat exchanger 3, the discharging process of the second packed bed 12 is terminated, and the discharging of the first packed bed 11 commences. In order to discharge the first packed bed 11, the packed bed valves at the exit of the first packed bed 104, at the exit of second packed bed 103 and at the exit of third packed bed 102 are closed. The discharge control valves between the inlets of the first and second packed bed 101, between the inlets of second and third packed beds 100 and the packed bed valve 105 between the exits of packed beds 12 and 13 and the heat exchanger 3 are opened. Therefore, the HTF flows from the compressor 2 to the heat exchanger 3 via the first packed bed 11 and the cold storage bypass 6. The entry X1 of the heat exchanger bypass 4 is located after the first packed bed 11.

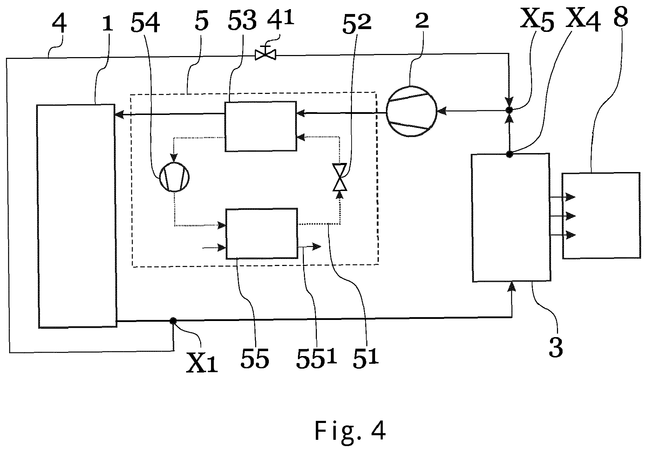

**Fig. 4** shows an embodiment of a Cold Storage System comprising a cold storage 1, a heat exchanger 3, and a compressor 2, placed in this order along a circuit of heat transfer fluid (HTF). The system further comprises a heat exchanger bypass 4 as in Fig. 1, and a chiller 5, represented by the dashed box and positioned on the HTF circuit between the compressor 2 and the cold storage 1. The chiller 5 includes its own refrigerant circuit 51, along which an expansion valve 52, an evaporator 53, a compressor 54, and a condenser 55 are placed (in this order).

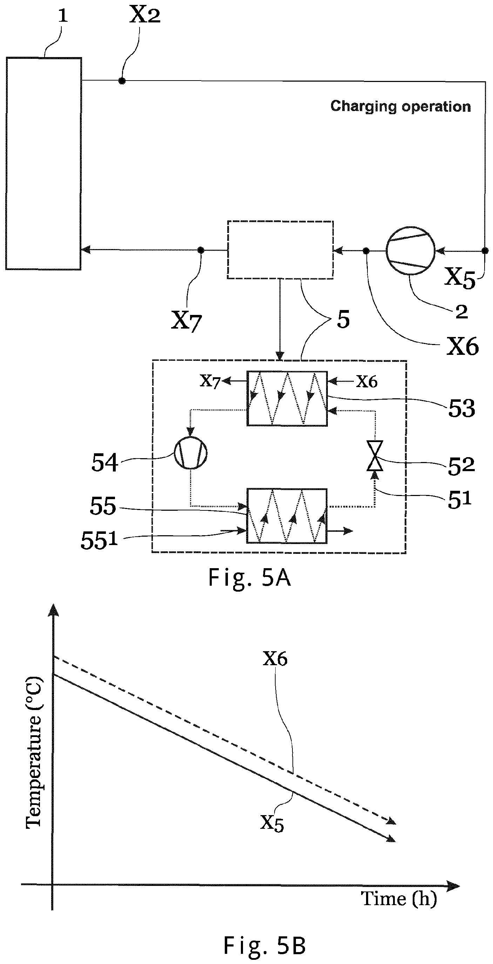

**Fig. 5A** shows an embodiment of a Cold Storage System comprising a cold storage 1, a compressor 2, and a chiller 5, placed in this order along a circuit of heat transfer fluid (HTF). The chiller 5 includes its own closed refrigerant circuit 51, along which an expansion valve 52, an evaporator 53, a compressor 54, and a condenser 55 are placed (in this order).

The Cold Storage System is displayed in charging mode. The HTF of the Cold Storage System passes through the evaporator 53 of the chiller 5, where it is cooled down to a low or ultra-low temperature (e.g. -50 °C). Heat energy carried by the HTF of the Cold Storage System is absorbed by the refrigerant of the chiller 5, and emitted through the condenser 55 into the ambient air 551. Upon leaving the chiller, the refrigerated HTF of the Cold Storage System enters the cold storage 1, where it absorbs heat energy and thus cools (charges) the cold storage 1.

In charging mode, a heat exchanger 3 will in general not be operated and has therefore been omitted in the figure. The functionality of the system including the chiller/cold storage bypass 7 in charging mode is not affected by the presence of the heat exchanger bypass 4, which has therefore also been omitted in the figure.

**Fig. 5B** shows, for a Cold Storage System as displayed in Fig. 5A, a qualitative plot of the HTF temperature against time at the positions X5 before the compressor 2 and X6 before the chiller 5. As the cold storage 1 is charged over time by the chiller 5, the HTF temperature at the outlet of the cold storage goes down, and both the chiller 5 and the compressor 2 operate under HTF temperature conditions varying over time.

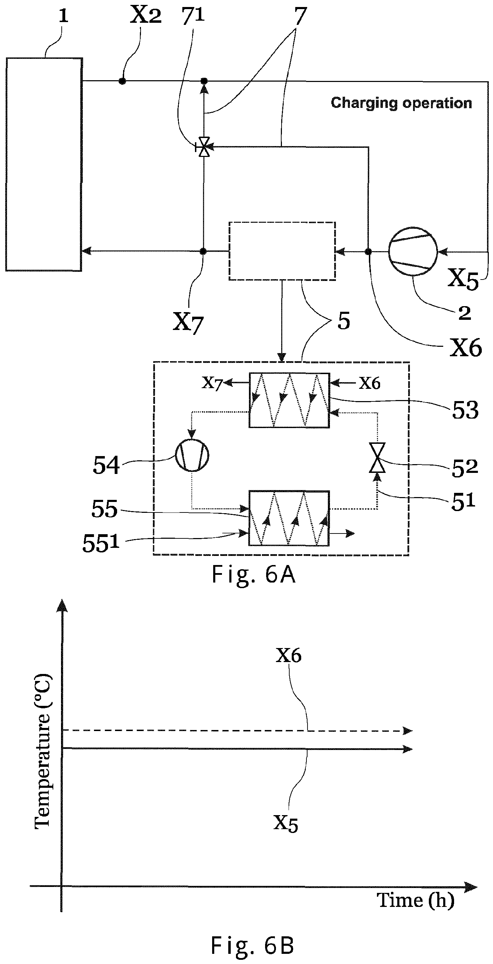

**Fig. 6A** shows an embodiment of a Cold Storage System comprising a cold storage 1, a compressor 2, and a chiller 5, placed in this order along a circuit of heat transfer fluid (HTF). The chiller 5 includes its own closed refrigerant circuit 51, along which an expansion valve 52, an evaporator 53, a compressor 54, and a condenser 55 are placed (in this order). The Cold Storage System further comprises a chiller/cold storage bypass 7, which connects the positions before X6 and after X7 the chiller 5 on the HTF circuit with a position X2 before the compressor 2.

The Cold Storage System is displayed in charging mode. The HTF of the Cold Storage System passes through the evaporator 53 of the chiller 5, where it is cooled down to a low (e.g. below -10 °C) or ultra-low (e.g. -50 °C) temperature. Heat energy carried by the HTF of the Cold Storage System is absorbed by the refrigerant of the chiller 5, and emitted through the condenser 55 into the ambient air 551. A part of the HTF of the Cold Storage System enters the chiller/cold storage bypass 7. Controlling the mass flow of HTF through the chiller/cold storage bypass 7 by the chiller/cold storage bypass valve 71, the HTF temperature at position X5 before the compressor 2 and X6 before the chiller 5 can be regulated. The part of the HTF which exits the chiller 5 but does not enter the chiller/cold storage bypass 7 continues on the HTF circuit and enters the cold storage 1, where it absorbs heat energy and thus cools (charges) the cold storage 1.

The chiller/cold storage bypass valve 71 may be a three-way valve to selectively control the bypass of the chiller 5 and/or the cold storage 1. This three-way valve 71 may mix freely the fluid from the positions X6 and X7.

In charging mode, a heat exchanger 3 will in general not be operated and has therefore been omitted in the figure. The functionality of the system including the chiller/cold storage bypass 7 in charging mode is not affected by the presence of the heat exchanger bypass 4, which has therefore also been omitted in the figure.

**Fig. 6B** shows, for a Cold Storage System as displayed in Fig. 6A, a qualitative plot of the HTF temperature against time at the positions X5 before the compressor 2 and X6 before the chiller 5. As the cold storage 1 is charged over time by the chiller 5, the HTF temperature at the outlet of the cold storage is kept constant at a setpoint temperature (e.g. 10 °C), by means of controlling the mass flow of HTF through the chiller/cold storage bypass 7 via the chiller/cold storage bypass valve 71. Both the chiller 5 and the compressor 2 operate under constant HTF temperature conditions.

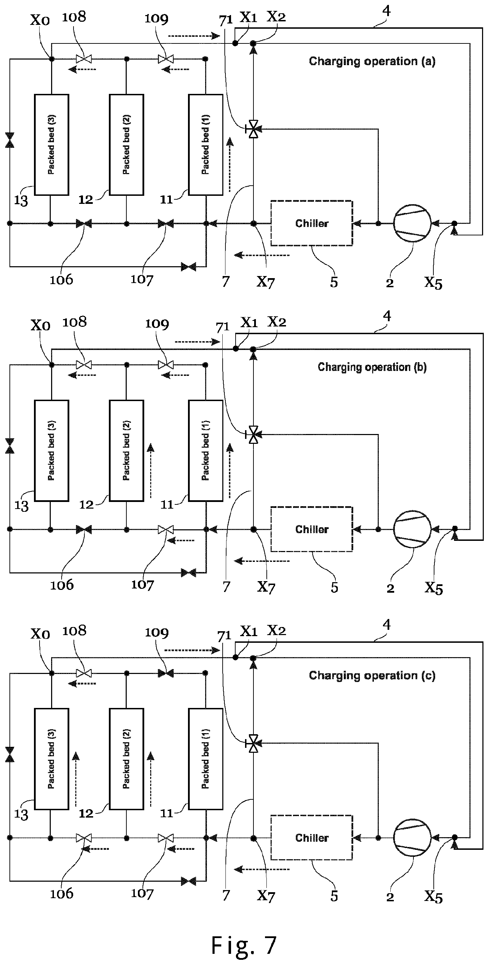

**Fig. 7** shows, from top to bottom, three consecutive steps (a), (b), (c) for charging an embodiment of a Cold Storage System comprising a cold storage 1, a conpressor 2, and a chiller 5, placed in this order along a circuit of heat transfer fluid (HTF), further comprising a heat exchanger bypass 4 and a chiller/cold storage bypass 7, for the exemplary case where the cold storage 1 is a multi-packed bed system of three packed beds 11, 12, 13 connected together in parallel. Throughout the process, the chiller/cold storage bypass valve 71 is operated to control the temperature at the inlet of the compressor 2. The three consecutive steps comprise, in turn,
(a) charging the first packed bed 11. This is achieved if the control valve 107 between the entries of the first and second packed bed and the control valve 106 between the entries of the second and third packed bed are closed. The control valves between the exits of the first and second packed bed 109 and between the exit of the second and third packed bed 108 are opened. Therefore, the HTF flows via the point X7 through the first packed bed 11, and from there through the packed bed valves 109 and 108 to the point X0.
(b) When the HTF temperature at the exit of first packed bed 11 reaches a setpoint temperature (e.g. -5 °C) predefined for the HTF at the exit X0 of the multi-packed bed system, the second packed bed 12 starts charging, while the first packed bed 11 continues the charging process. At this stage, the packed bed valve 106 between the entries of the second and third packed bed is still closed. The packed bed valve 107 between the entries of the first and the second packed bed, along with the packed bed valve 109 between the exits of the first and the second packed bed and the packed bed valve 108 between the exits of the second and the third packed bed are opened. Therefore, the HTF flows through both the first packed bed 11 and the second packed bed 12.
(c) When the HTF temperature at the exit of the second packed bed 12 reaches the setpoint temperature predefined for the HTF at the exit X0 of the multi-packed bed system, the third packed bed 13 starts charging. The second packed bed 12 continues the charging process. To this end, the packed bed valve 109 between the exits of the first and second packed bed is closed. The packed bed valves between the entries of the first and second packed beds 107, between the entries of the second and third packed beds 106, and between the exits of the second and third packed beds 108 are opened. Therefore, the HTF flows via both the packed bed 12 and the packed bed 13.

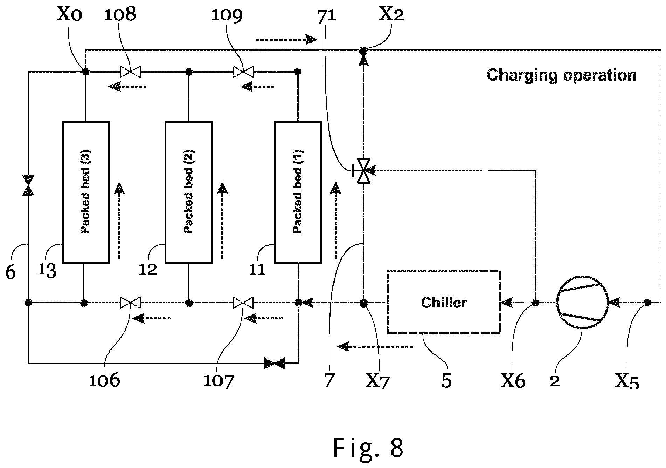

**Fig. 8** shows the settings for charging an embodiment of a Cold Storage System comprising a cold storage 1, a compressor 2, and a chiller 5, placed in this order along a circuit of heat transfer fluid (HTF), further comprising a chiller/cold storage bypass 7, for the case where the cold storage is a multi-packed bed system of three packed beds connected together in parallel. Throughout the process, the chiller/cold storage bypass valve 71 is operated to control the temperature at the inlet of the compressor 2. In this setting, the packed bed valves 106, 107, 108 and 109 are open, and the three packed beds 11, 12, 13 are charged at the same time.

The present invention relates also to the following embodiments: A Cold Storage System comprising a cold storage 1 for storing coldness, a compressor 2 enabling the circulation of a heat transfer fluid (HTF), a heat exchanger 3 for delivering of coldness to a consumer 8, wherein the heat exchanger 3 is arranged between the compressor 2 and the cold storage 1, and a heat exchanger bypass 4 with a heat exchanger bypass valve 41, wherein the heat exchanger bypass 4 connects an inlet and an outlet of the heat exchanger 3, and the heat exchanger bypass valve 41 is adapted to control a bypass flow through the heat exchanger bypass 4 to keep a temperature at the inlet of the heat exchanger 3 at a predefined setpoint temperature. The predefined setpoint temperature is below 30 °C or at about 25 °C. The Cold Storage System optionally further comprises a chiller 5 for cooling the HTF to low or ultra-low temperature. Furthermore, optionally the cold storage 1 includes a multi-packed bed system. A method for discharging a cold storage 1 comprises the steps of enabling the circulation of the HTF carrying heat or coldness, delivering of coldness to a consumer 8 by a heat exchanger 3, bypassing an amount of HTF along the heat exchanger bypass 4 with a heat exchanger bypass valve 41, wherein the heat exchanger bypass connects an inlet and an outlet of the heat exchanger 3, and the heat exchanger bypass valve 41 is adapted to control a bypass flow through the heat exchanger bypass 4 to keep a temperature at the inlet of the heat exchanger 3 at a predefined setpoint temperature.

For all embodiments displayed in the figures, the compressor 2 may equally be some other pumping device, designed to move the HTF through the HTF circuit.

It is understood in all figures that temperatures, where indicated, are presented merely for illustrative purposes and can be adapted to the desired application and/or to the employed HTF in concrete embodiments.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

While each embodiment may stand on its own as a separate example, it is to be noted that in other embodiments the defined features can be combined differently, i.e. a particular feature described in one embodiment may also be realised in other embodiments. Such combinations are covered by the disclosure herein unless it is stated that a specific combination is not intended.

### LIST OF REFERENCE LABELS

- 1: cold storage
- 100, 101, ...: packed bed valves of multi-packed bed system
- 11, 12, 13: packed beds of multi-packed bed system
- 2: compressor
- 3: heat exchanger
- 31: fan
- 4: heat exchanger bypass
- 41: heat exchanger bypass valve
- 5: chiller
- 51: chiller refrigerant circuit
- 52: chiller expansion valve
- 53: chiller evaporator
- 54: chiller compressor
- 55: chiller condenser
- 551: flow of ambient air through chiller condenser
- 6: cold storage bypass
- 61: cold storage bypass valve
- 7: chiller/cold storage bypass
- 71: chiller/cold storage bypass valve
- 8: consumer
- X0, X1, ...: positions along the HTF circuit

## Claims

1. A Cold Storage System comprising:
- a cold storage (1) for storing coldness;
- a compressor (2) enabling circulation of a heat transfer fluid in a circuit;
- a heat exchanger (3) for delivering of coldness to a consumer (8), wherein the heat exchanger (3) is arranged between the cold storage (1) and the compressor (2) within the heat transfer fluid circuit; and
- a heat exchanger bypass (4) for heat transfer fluid, adapted to bypass the heat exchanger (3) and to channel heat transfer fluid from the outlet of the cold storage (1) to the inlet of the compressor (2).

2. The Cold Storage System according to claim 1, wherein the heat exchanger bypass (4) further comprises a heat exchanger bypass valve (41), adapted to control a flow of heat transfer fluid through the heat exchanger bypass (4) to keep a temperature at the inlet of the compressor (2) within a predefined temperature range or around a setpoint temperature.

3. The Cold Storage System of claim 1 or claim 2, wherein the predefined temperature range is 23 °C to 27 °C, or where the predefined setpoint temperature is below 30 °C or at about 25°C.

4. The Cold Storage System according to any of the preceding claims, further comprising a cold storage bypass (6) with a cold storage bypass valve (61), wherein the cold storage bypass (6) is adapted to bypass the cold storage (1) and to channel heat transfer fluid from the inlet of the cold storage (1) to the inlet of the heat exchanger (3), and the cold storage bypass valve (61) is adapted to control a flow of heat transfer fluid through the cold storage bypass (6) to keep a temperature at the inlet of the heat exchanger (3) at a predefined range of temperature or around a setpoint temperature.

5. The Cold Storage System according to any of the preceding claims, further comprising a chiller (5) cooling the heat transfer fluid after the compressor (2) to low or ultra-low temperature for cooling the cold storage (1), where the Cold Storage System is operable in a charging mode during which a temperature within the cold storage (1) is reduced by means of the heat transfer fluid, and where the Cold Storage System is operable in a discharging mode during which the heat exchanger (3) delivers coldness to the consumer (8).

6. The Cold Storage System according to claim 5, further comprising a chiller/cold storage bypass (7) with a chiller/cold storage bypass valve (71), wherein the chiller/cold storage bypass (7) is adapted to bypass the chiller and the cold storage (1) and to channel heat transfer fluid from the outlet of the chiller (5) to the inlet of the compressor (2) when the Cold Storage System is operated in charging mode, and wherein the chiller/cold storage bypass valve (71) is adapted to control a flow of heat transfer fluid through the chiller/cold storage bypass (7) to keep a temperature at the inlet of the compressor (2) at a predefined range of temperature or around a setpoint temperature.

7. The Cold Storage System according to any of the preceding claims, wherein the cold storage (1) includes a multi-packed bed system comprising a plurality of packed beds (11, 12, 13) and a plurality of packed bed valves (100, 101, ...) such that the amount of heat transfer fluid flowing through each storage element is controlled by at least one respective packed bed valve (100, 101, ...).

8. The Cold Storage System to any of the preceding claims, further comprising a control unit configured to control one or more of the following:
- periods of time where the Cold Storage System is in charging and in discharging mode, respectively,
- the heat exchanger bypass valve (41), in order to keep, in discharging mode, the temperature of the heat exchange fluid at the inlet of the compressor (2) in a predefined temperature range or around a setpoint temperature,
- the cold storage bypass valve (61), in order to keep, in discharging mode, the temperature of the heat exchange fluid at the inlet of the heat exchanger (3) in a predefined temperature range or around a setpoint temperature,
- the chiller/cold storage bypass valve (71), in order to keep, in charging mode, the temperature of the heat exchange fluid at the inlet of the compressor (2) in a predefined temperature range or around a setpoint temperature,
- the plurality of packed bed valves (100, 101, ...), such that, in discharging mode, the heat exchanger bypass (41) discharges selectively one or more packed beds (11, 12, 13) of the multi-packed bed system.

9. A Cold Storage System according to claim 8, where the control unit controls the periods of time where the Cold Storage System is in charging and in discharging mode following readings of an external temperature and/or following the day and night cycle.

10. A method for discharging a Cold Storage System with a heat transfer fluid circuit passing through a cold storage (1), a heat exchanger (3), and a compressor (2), the method including the steps:
- enabling the circulation of the heat transfer fluid carrying heat or coldness by a compressor or a pump (2);
- delivering of coldness, by the heat exchanger, to a consumer (8);
- bypassing the heat exchanger (3) by an amount of heat transfer fluid along a heat exchanger bypass (4) from the outlet of the cold storage to the inlet of the compressor.

11. The method for discharging the Cold Storage System according to claim 10, further comprising the step:
- controlling an amount of heat transfer fluid passing through the heat exchanger bypass (4) by a heat exchanger bypass valve (41) in order to keep the temperature of the heat transfer fluid at the inlet of the compressor (2) in a predefined range of temperatures around at a setpoint temperature.

12. The method for discharging a Cold Storage System according to claim 10 or claim 11, where the cold storage (1) includes a multi-packed bed system comprising a plurality of packed beds (11, 12, 13) and a plurality of packed bed valves (100, 101, ...), further comprising the step:
- controlling, by the plurality of packed bed valves (100, 101, ...), the flow of heat transfer fluid from the multi-packed bed system such that the heat exchanger bypass (41) discharges selectively one or more packed beds (11, 12, 13) of the multi-packed bed system.

13. A method for discharging a Cold Storage System according to claim 10 or claim 11 or claim 12, where the Cold Storage System comprises a control unit configured to control the periods of time where the Cold Storage System is in discharging mode following an external temperature reading and/or following the day and night cycle, and where the method further comprises the step of controlling, by the control unit, the Cold Storage System such that it is in discharging mode only during times of specific external temperature ranges and/or during daytime.
